# EUROPEAN PATENT APPLICATION

(11) **EP 0 670 202 A1**
(43) Date of publication of application: **06.09.1995**
(21) Application number: 95102822.4
(22) Date of filing: 28.02.1995
(51) Int. Cl.: B25J 9/10, B25J 19/00, B25J 15/02, B21J 13/10

(54) **Forging robot hand**

(30) Priority: 28.02.1994 JP 55127/94
(71) Applicant: Director-General of Agency of Industrial Science and Technology, Jiro Hiraishi, Tokyo (JP)
(72) Inventor: Todo, Yoshinori, Nagasaki-shi, Nagasaki-ken (JP); Sakamoto, Masami, Nagasaki-shi, Nagasaki-ken (JP); Ushijima, Noriaki, Nagasaki-shi, Nagasaki-ken (JP)
(74) Representative: Altenburg, Udo, Dipl.-Phys.

(57) **Abstract**

A robot hand of the invention is a forging robot hand for holding one end of a forge workpiece receiving an impulsive load and deforming. A grip hand 3 for holding the workpiece is disposed in a casing 4 forming the outer frame of the robot hand 2. The grip hand 3 and the casing 4 are coupled by two parallel link mechanisms 51 and 52. The casing 4 is provided with position return cylinders 13 and 22 for returning the grip hand 3 to a predetermined initial position and position hold cylinders 25 for holding the moved grip hand 3 to the moved position. When an impulsive load is imposed on the workpiece, the robot hand 3 moves in parallel with the casing 4 to absorb the impulsive force.

## Description

### TECHNICAL FIELD

This invention relates to a robot hand that can be used for die forging, including press forging as well as hammer forging, and in particular to a forging robot hand that can absorb an impact shock and precisely move a workpiece to the target impression even if the holding part of the workpiece becomes deformed.

### TECHNICAL BACKGROUND

Hitherto, robot hands that can sufficiently deal with material deformation caused by a forging impact and the shock and vibration caused by the impact involved in die forging with hammers have not been provided.

Workpiece handling can be performed only manually by workers, particularly in hammer die forging with a die having multiple impressions.

There are the following two possible reasons for this:

First, he object of die forging with a hammer is to deform forging material by strike energy and involves a large shock and vibration, and it is difficult for normal robots and manipulators to securely hold a workpiece.

Second, in die forging in which a workpiece is fed into multiple impressions in sequence, for forging, when the workpiece is forged in one impression, it is stretched, etc., and thus cannot be precisely inserted into the next impression unless the stretching, etc., at the time is taken into consideration.

The second reason will be discussed in detail.

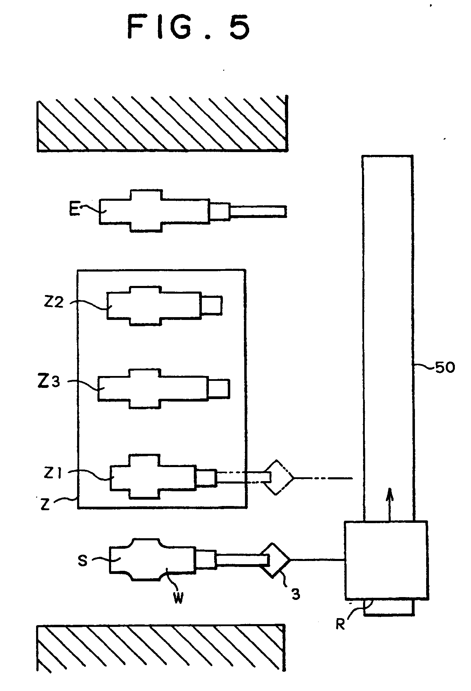

When a die having multiple impressions is used, as shown in Figure 5, to shorten the cycle time in die forging, a material workpiece may be forged between upper and lower dies with one end of the material workpiece being held without shifting it on the die during forging.

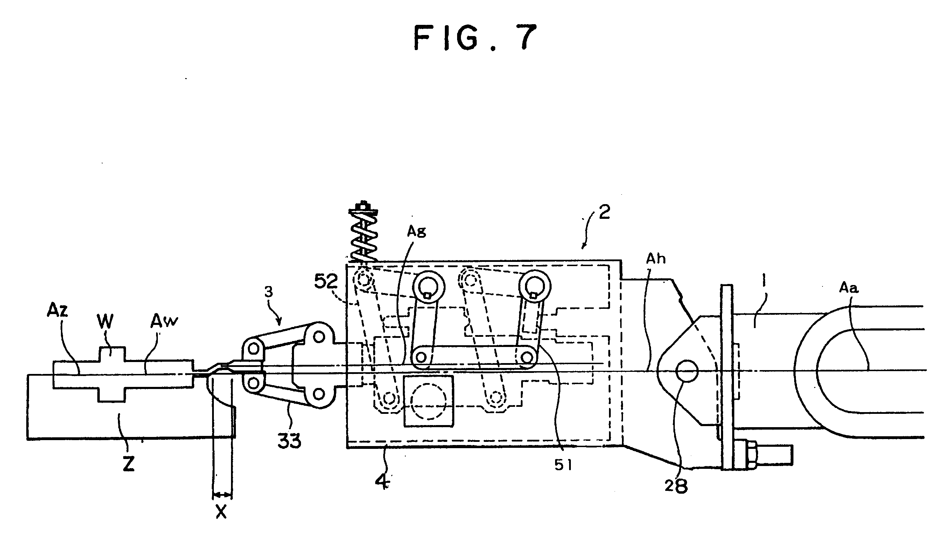

In such die forging, when the material workpiece is forged in one impression and becomes an intermediate workpiece, the holding part of the workpiece is rapidly stretched and a sinking phenomenon of the workpiece occurs at the same time, as shown in Figure 7 as X.

A robot hand that cannot sufficiently follow up such a stretch of the hold part of the workpiece or sinking of the workpiece would cause damage to the robot hand itself or the robot main unit and cannot perform accurate positioning of the intermediate workpiece to the next impression.

### SUMMARY OF INVENTION

It is therefore an object of the invention to provide a forging robot hand of a robot for forging a forge workpiece with one end of the length of the forge workpiece held, which can absorb a strike impact shock for protecting the robot hand itself and the robot main unit and follow up displacement of the hold part of the workpiece for moving the workpiece to the target impression accurately.

To these ends, according to the invention, there is provided a forging robot hand comprising:
a grip hand for holding a forge workpiece on which an impulsive load is imposed;
a grip casing into which a part of the grip hand is inserted, the grip casing being fitted to the robot arm;
means for coupling the grip hand to the grip casing so that the grip hand can make a relatively parallel movement with the grip casing;
position hold means for holding the grip hand making a relative movement with respect to the grip casing to the moved position; and
means for returning the grip hand to a predetermined initial position within a relative movement path of the grip hand with respect to the grip casing,
the grip hand having a plurality of fingers for holding the workpiece and a finger drive mechanism for opening and closing the fingers,
the grip casing into which the finger drive mechanism of the grip hand is inserted, the grip casing having one end open so as to allow the fingers to face the outside through the end, and the other end fitted to the robot arm,
the coupling means having two parallel link mechanisms each comprising a plurality of link pieces and a plurality of pins for coupling the link pieces to each other,
one of the two parallel link mechanisms, which will be hereinafter referred to as a casing-side parallel link mechanism, having two rotation shafts fitted to the grip casing for rotation with respect to the grip casing, two first link pieces parallel with each other, each having one end fitted to the corresponding rotation shaft, and a second link piece for coupling the opposed ends of the two first link pieces to each other via the pins, the first link pieces being fitted to the rotation shafts so as to rotate with rotation of the rotation shafts,
the other parallel link mechanism, which will be hereinafter referred to as a grip-side parallel link mechanism, having two first link pieces parallel with each other, each having one end fitted to the corresponding rotation shaft and two second link pieces parallel with each other, each having one end fitted to the other end of each of the first link pieces via the pins, the first link pieces being fitted to the rotation shafts so as to rotate with rotation of the rotation shafts, the two second link pieces each having the other end fitted to the grip drive mechanism via the pins.

Assume that a die is formed with a blocking impression and a finishing impression. To forge a workpiece with the die, first the initial position return means is started for positioning the grip hand at the predetermined initial position. The workpiece is held with the grip hand. Next, the position hold means is started for holding the position of the grip hand, with respect to the grip casing, to the initial position. In this condition, the entire robot hand is moved for placing the workpiece in a position almost coming in contact with the blocking impression, and the initial position return means and the position hold means are released. Then, the means for coupling the grip hand and the grip casing, namely, the two parallel link mechanisms, become capable of operation and the grip hand moves with respect to the grip casing. As a result, the workpiece held with the grip hand fits into the blocking impression. The workpiece is struck and deformed. At this time, the part held with the grip hand and the holding part of the workpiece, and a part between that part and the die impression inside, stretch. The grip hand moves in parallel with the casing by a distance corresponding to the stretch, etc. Therefore, if an impulsive load is imposed on the workpiece, the grip hand is displaced, so that the impulsive load can be absorbed, protecting not only the robot hand, but also the robot main unit.

It should be noted that since the grip hand makes a relative movement with respect to the casing before and after the workpiece is struck, the relative positional relationship between the workpiece part inserted into the lower die impression and the grip casing does not change and as a result, the relative positional relationship between the workpiece and the robot arm does not change either. It should also be noted that although the grip hand makes a relative movement with respect to the casing, the movement is a parallel movement and therefore the direction of the workpiece directed toward the grip casing and the robot arm does not change.

After the workpiece is struck, the position hold means is immediately started in order to hold the position of the grip hand with respect to the grip casing at the current position. This means that the relative position of the workpiece with respect to the grip casing and the robot arm is temporarily fixed.

Next, in this condition, the robot arm is moved together with the entire robot hand and the workpiece held with the grip hand is moved to the finishing impression. At this time, the travel distance of the robot hand and the robot arm is defined with the robot arm as the reference. If the travel distance of the robot arm is thus defined with the robot arm as the reference, the workpiece can be accurately inserted into the finishing impression because the relative positional relationship between the workpiece and the robot arm, and the direction of the workpiece toward the robot arm, do not change before and after the workpiece is struck, as described above.

After the workpiece is inserted into the finishing impression, the position hold means is released, enabling the workpiece to move in parallel with the grip casing before the workpiece is struck.

After the workpiece is struck in the finishing impression, the position hold means is started again for disabling the workpiece from moving with respect to the grip casing, then the robot hand and the robot arm are moved in order to move the workpiece held with the grip hand at the workpiece release position, where the workpiece is released.

Thus, in the invention, not only the robot hand, but also the robot main unit can be protected from the impulsive force applied to the workpiece. Further, in the invention, to use a die having multiple impressions for forging a workpiece, the workpiece can be moved to the next target impression accurately.

By the way, in the forging robot hand, the initial position return means may have a position return fluid pressure cylinder which comes in contact with at least one of the link pieces forming part of the casing-side parallel link mechanism and the link pieces forming part of the grip-side parallel link mechanism, which will hereinafter be referred to as a specific link piece, and can move the specific link piece to a position where the specific link piece should be placed when the grip hand is placed in the initial position.

The position hold means may have a plurality of position hold fluid pressure cylinders being fitted to the grip casing for pinching the grip drive mechanism of the grip hand so as to disable the grip hand from making a relative movement with respect to the grip casing.

Further, the forging robot hand may further include a hook for hooking at least one of the pins for coupling the link pieces forming part of the casing-side parallel link mechanism to each other and the pins for coupling the link pieces forming part of the grip-side parallel link mechanism to each other, which will hereinafter be referred to as a specific pin, and a spring for applying an elastic force in a direction opposite to a relative movement of the hook with respect to the grip casing as the specific pin moves,
the spring generating an elastic force balancing with a load imposed on the specific pin (except the elastic force of the spring) when the grip hand does not hold the workpiece and is in the initial position.

According to the invention, there is provided a forging robot comprising the robot hand, a robot arm, and a coupling pin for swingably coupling the robot hand to the robot arm, wherein one of the robot hand and the robot arm is provided with a flange and the other is provided with a stopper abutting the flange for regulating the swing range of the robot hand with respect to the robot arm.

Thus, the robot hand is swingably fitted to the robot arm, whereby if the shock that cannot completely be absorbed simply by a relative movement of the grip hand with respect to the grip casing is applied to the grip hand via the workpiece, the robot hand swings in the direction of the impulsive force, so that the robot hand and the robot arm can be protected from the shock, especially, in the troubled case such that the workpiece adhere to the upper die and is raised with the upper die immediately after a forging strike.

### BRIEF DESCRIPTION OF THE DRAWINGS

In the accompanying drawings:
Figure 1 is a sectional side view of a robot hand according to one embodiment of the invention;
Figure 2 is a side view of the robot hand according to the embodiment of the invention;
Figure 3 is a sectional view taken on line A-A in Figure 1;
Figure 4 is a sectional view taken on line B-B in Figure 1;
Figure 5 is an illustration showing impression arrangement in a die and robot layout according to the embodiment of the invention;
Figure 6 is an illustration showing the positional relationships among a die impression, a robot hand, and a robot arm when a forge workpiece is inserted into the die impression before forging is performed in the embodiment of the invention;
Figure 7 is an illustration showing the positional relationships among the die impression, the robot hand, and the robot arm just after a strike in the embodiment of the invention; and
Figure 8 is an illustration showing a robot hand state when a grip hand of the embodiment receives an upward external force.

### BEST MODE FOR CARRYING OUT THE INVENTION

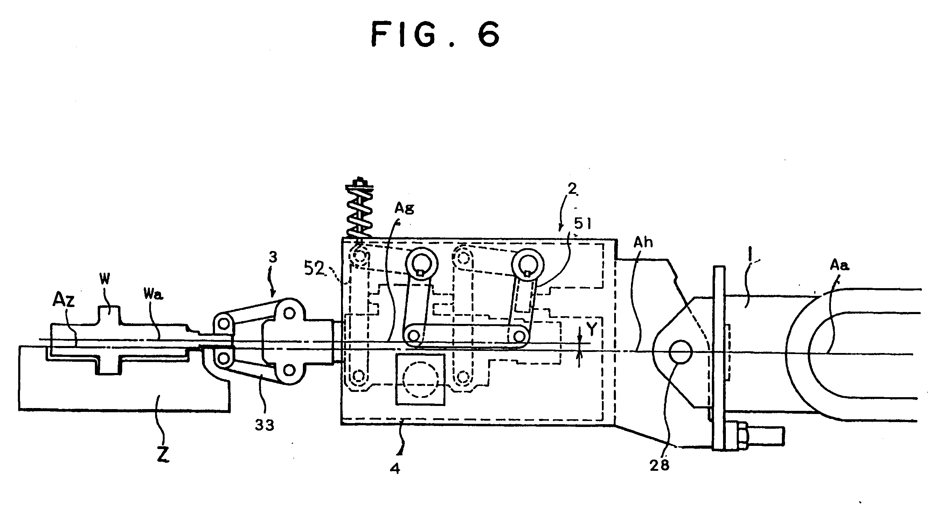

A robot of an embodiment of the invention is a robot for holding one longitudinal end of a forge workpiece W, as shown in Figure 6.

A robot hand 2 is fitted to the tip of a robot arm 1.

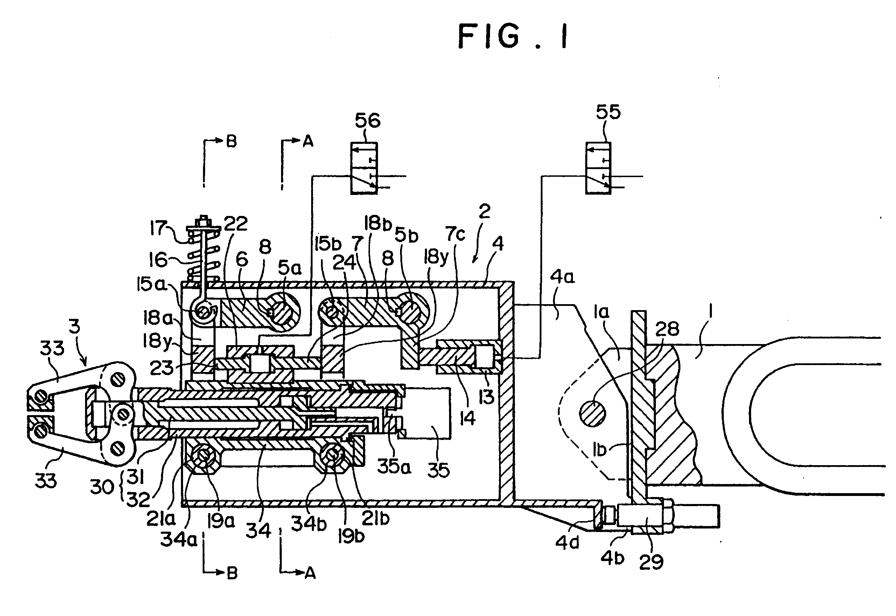

The robot hand 2 has a grip hand 3 for directly holding one longitudinal end of a forge workpiece W and a grip casing 4 into which the rear of the grip hand 3 is inserted, as shown in Figure 1.

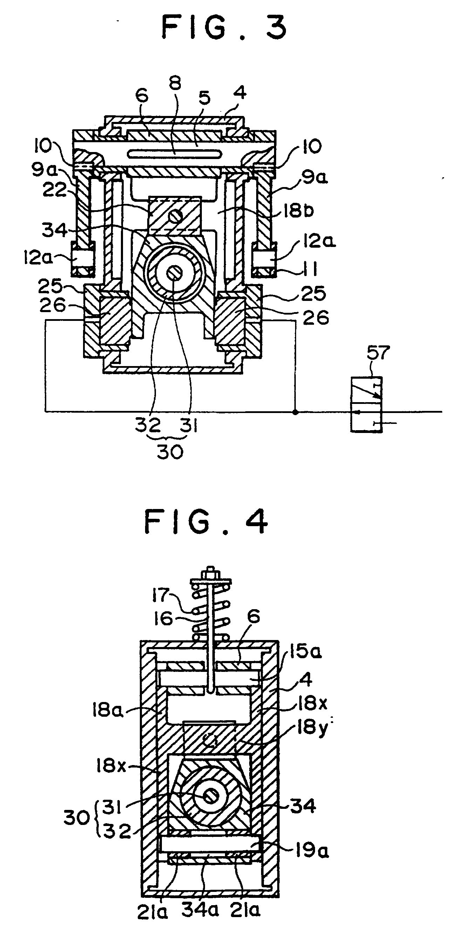

The grip casing 4 is formed like a hollow rectangular solid having the front end opened, as shown in Figures 1 and 4.

The grip casing 4 contains a coupling mechanism for holding the grip hand 3 so that it is displaceable up and down and back and forth while maintaining a condition in which the grip hand 3 is in parallel with the axis center of the grip casing 4 (horizontal if the axis center of the casing 4 is horizontal).

The coupling mechanism which holds the grip hand 3 so that it is displaceable up and down and back and forth when holding the forge workpiece W, and can follow up deformation and displacement of the forge workpiece W, provides a shock absorbing section for absorbing the shock caused by a forging strike, whereby the robot hand 2 itself and the robot main unit are held.

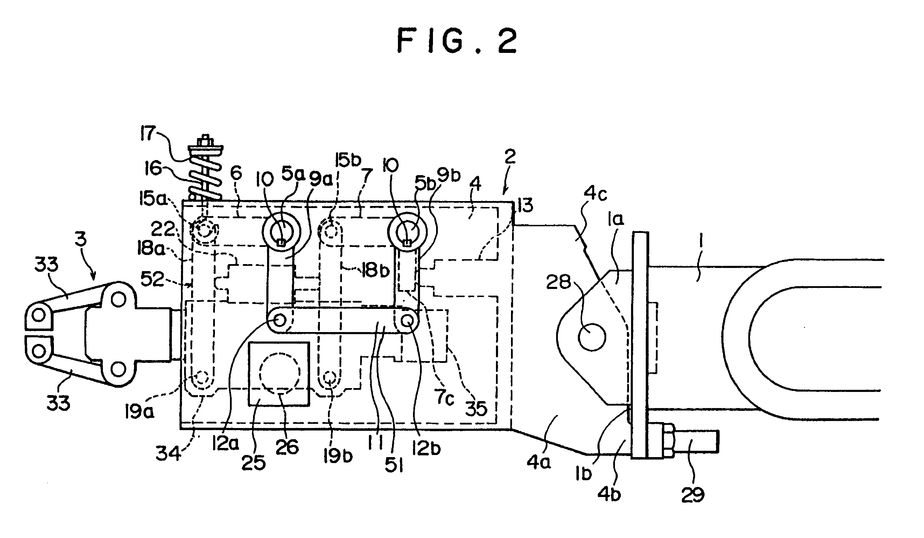

As shown in Figures 1 and 2, rotation shafts 5a and 5b passing through the left and right sides of the casing 4 at right angles to the axis center of the casing 4 are provided at forward and backward places in the upper portion of the casing 4 forming the outer frame of the robot hand 2.

In the casing 4, a front horizontal link 6 is integrally fixed to the front rotation shaft 5a by a key 8 facing almost horizontally toward the front.

A rear horizontal link 7 is integrally fixed to the rear rotation shaft 5b by a key 8 facing almost horizontally toward the front.

As shown in Figures 2 and 3, vertical links 9a and 9b are downward fixed integrally to both ends of the front and rear rotation shafts 5a and 5b projecting outward from the casing side by keys 10. The horizontal links 6 and 7 fixed to the rotation shafts 5a and 5b inside the casing 4 and the vertical links 9a and 9b fixed to the rotation shafts 5a and 5b outside the casing 4 are fitted at right angles, with the rotation shafts 5a, 5b as the center.

The lower ends of the front and rear vertical links 9a and 9b are linked to each other by a coupling link 11 via pins 12a and 12b.

Therefore, the front and rear rotation shafts 5a and 5b rotate synchronously at the same angle due to the coupling link 11. As a result, the front and rear vertical links 9a and 9b outside the casing 4 and the horizontal links 6 and 7 inside the casing 4 also rotate synchronously at the same angle as with the rotation shafts 5a and 5b.

A vertical arm 7c is integrally formed on the base end of the rear horizontal link 7 are extends downward at right angles with the rear rotation shaft 5b as the center. A fluid pressure cylinder 13 with a piston 14 operating in parallel with the axis center of the casing 4 (horizontal if the axis center of the casing 4 is horizontal) is fitted to the rear of the casing inside.

A fluid is supplied to the cylinder 13 (fluid pressure cylinder for up and down position return) via a switch valve 55, as shown in Figure 1. It is discharged via the switch valve 55 from within the cylinder 13. The piston 14 is mounted on the cylinder 13 so that it can move back and forth.

Normally, fluid pressure in the cylinder 13 is removed. When a fluid is supplied to the cylinder 13, the piston 14 is pushed out forward to the out limit. When the tip of the piston 14 comes in contact with the rear of the front vertical arm 7c which leans downward and backward, the piston 14 pushes the vertical arm 7c back until the vertical arm 7c is placed in a vertical condition.

When the vertical arm 7c rotates counterclockwise in Figure 1, with the rear rotation shaft 5b as the center, namely, toward the rear of the robot hand, the piston 14 retreats and is pushed in. When the vertical arm 7c leans backward and downward, the front tips of the horizontal links 6 and 7 also lean downward because the rear horizontal link 7 is integrated with the vertical arm 7c at right angles and the front horizontal link 6 synchronizes with the rear horizontal link 7 via the coupling link 11. When a fluid is supplied to the cylinder 13 in this state, the piston 14 advances, pushing the vertical arm 7c back to the vertical position. The front tips of the front and rear horizontal links 6 and 7 pivot upward, and the front and rear horizontal links 6 and 7 return to the parallel (horizontal if the axis center of the casing 4 is horizontal) condition with the axis center of the casing 4.

A hook 16 for suspending an upper transverse shaft (specific pin) 15a of the tip of the front horizontal link 6 is suspended in the front top of the inside of the casing 4, as shown in Figures 1 and 4. The hook 16 is penetrated from the inside of the casing 4 to the outside and is always energized upward by a spring 17 provided outside the casing 4.

The elastic force of the spring 17 is adjusted so as to be equivalent to the weight of suspension link 18a on the upper transverse shaft 15a, the grip hand 3, etc., when the horizontal link 6 is in a parallel (horizontal if the axis center of the casing 4 is horizontal) condition with the axis center of the casing 4.

At the tips of the front and rear horizontal links 6 and 7, suspension links 18a and 18b are suspended rotatably by means of upper transverse shafts 15a and 15b. When viewed from the back and the front, the suspension links 18a and 18b form an H shape having a horizontal part 18y connecting left and right vertical parts 18x and 18x, as shown in Figure 4.

The grip hand 3 comprises fingers 33, 33 for holding a workpiece W, a fluid pressure cylinder 30 for opening and closing the fingers, a housing 34 for housing the cylinder 30, and a fluid pressure rotation cylinder 35 for rotating the finger opening and closing fluid pressure cylinder 30 in the housing 34.

The finger opening and closing fluid pressure cylinder 30 has a piston 31 reciprocating so as to open and close the fingers 33, 33 and a cylindrical cylinder casing 32 for housing the piston 31 to allow it to reciprocate.

The finger opening and closing fluid pressure cylinder 30 is inserted into a hole having a round cross section pierced at the back and the front in the housing 34.

The finger opening and closing fluid pressure cylinder 30 is supported rotatably around the center axis of the fluid pressure cylinder 30 in the housing 34.

The housing 34 for rotatably holding the finger opening and closing fluid pressure cylinder 30 is disposed inside the casing 4.

The fluid pressure rotation cylinder 35 is fitted to the rear end of the housing 34, as shown in Figure 1. An output shaft 35a of the cylinder 35 is connected to the rear end of the finger opening and closing fluid pressure cylinder 30.

Therefore, the forge workpiece W held by the grip hand 3 can be rotated by driving the cylinder 35.

Holes 34a and 34b penetrating left and right are on the front and rear of the bottom of the housing 34, as shown in Figures 1 and 4.

Lower transverse shafts 19a and 19b are rotatably inserted into the holes 34a and 34b and the lower ends of the suspension links 18a, 18b. The housing 34 is suspended in the casing 34 so at to be displaceable up and down, and back and forth, while maintaining a parallel (horizontal if the axis center of the casing 4 is horizontal) condition with the axis center of the casing 4 by means of the front and rear suspension links 18a and 18b.

That is, the grip hand 3 is suspended in parallel (horizontal if the axis center of the casing 4 is horizontal) with the axis center of the casing 4 by means of the suspension links 18a and 18b from the tips of the front and rear horizontal links 6 and 7.

Therefore, when an up and down external force is applied to the grip hand 3, the grip hand 3 moves up and down maintaining a position parallel with the axis center of the casing 4. For example, after striking a workpiece W by hummer, the grip hand 3 moves up and down instantaneously. The movement of the grip hand 3 prevents the strike force from propagating to the entirety robot hand 2 and the robot arm 1. That is, the shock by the strike is absorbed.

Then a back and front external force is applied to the grip hand 3, the grip hand 3 moves back and front maintaining a position parallel with the axis center of the casing 4.

When the workpiece W is forged by a hummer, held portion of the workpiece W is extended instantaneously, and then the grip hand 3 with the work piece W is pushed into the casing 4. The grip hand 3 is moved by the strike force, but the entirely robot hand 2 and the robot arm 1 do not receive the strike impact.

Further, in order to improve the absorbability, a cylindrical elastic member, such as buffer rubber 21a, 21b, is inserted into each of the holes 34a and 34b of the housing 34, as shown in Figures 1 and 4.

When a strike impact shock is applied to the grip hand 3, the impulsive force propagating via the suspension links 18a, 18b, horizontal links 6, 7, rotation shafts 5a, 5b, vertical links 9a, 9b, etc., to the entire robot hand 2 is deformed by the buffer rubber 21a, 21b for so as to buffer it.

A fluid pressure cylinder (fluid pressure cylinder for back and forth position return) 22 exists at a position sandwiched between the front and rear suspension links 18a and 18b on the top of the housing 34. A forward-facing piston 23 and a backward-facing piston 24 are inserted into the cylinder 22.

A fluid is supplied to the cylinder 22 via a switch valve 56, as shown in Figure 1. It is discharged via the switch valve 56 from the cylinder 22.

Normally, fluid pressure in the cylinder 22 is removed. When fluid pressure is supplied to the cylinder 22, the pistons 23 and 24 are pushed out to the out limits, and the tips of both the pistons 23 and 24 come in contact with the horizontal parts 18y and 18y of the front and rear suspension links 18a and 18b.

The switch valves 55 and 56 for supplying pressure to the fluid pressure cylinders 22 and 13 may be combined into one for pressurizing or depressurizing the cylinders 22 and 13 at the same time.

When the grip hand 3 is pushed backward by an external force, the front and rear suspension links 18a and 18b lean diagonally downward toward the rear.

Although the lower transverse shafts 19a and 19b and the grip hand 3 are the same in backward travel distance, the distance from the upper transverse shaft 15a, 15b to the horizontal part 18y, 18y of the suspension link 18a, 18b is smaller than that from the upper transverse shaft 15a, 15b to the lower transverse shaft 19a, 19b. Therefore, the backward travel distance of the horizontal part 18y is smaller than that of the grip hand 3.

When the grip hand 3 is pushed backward, the piston 23 is pushed into the fluid pressure cylinder 22.

When fluid pressure is supplied to the cylinder 22, the pistons 23 and 24 are pushed out by the fluid pressure, restoring the suspension links 18a and 18b which lean, to the former positions. When the pistons 23 and 24 go to the out limits, the suspension links 18a and 18b are restored to the vertical condition. That is, the grip hand 3 is returned to the initial position.

Two fluid pressure cylinders (position holding fluid pressure cylinders) 25 and 25 facing each other toward the inside exist on the left and right sides of the casing 4, and pistons 26, 26 are inserted inwardly into the cylinders, as shown in Figures 2 and 3.

A fluid is supplied to the fluid pressure cylinders 25 via a switch valve 57. It is discharged via the switch valve 57 from the cylinders 25.

Normally, fluid pressure is applied to the cylinders 25, pinching the housing 34 from the sides, and the grip hand 3 does not move with respect to the casing 4. This means that the fluid pressure cylinders 25 and 25 serve as a brake for the grip hand 3.

When a forge workpiece W is struck, the switch valve 57 is switched for depressurizing the fluid pressure cylinders 25 and 25. Thus, the position of the grip hand 3 is displaced due to compression, deformation, and stretching of the workpiece W.

When the striking is completed, the switch valve 57 is restored to the former position and fluid pressure is applied to the fluid pressure cylinders 25 for putting on the brake to fix the grip hand 3.

As shown in Figures 1 and 2, a bracket 4a is projected on the rear end of the casing 4 and a bracket 1a is projected on the front end of the robot arm 1 for coupling the brackets 4a and 1a by a shaft 28. That is, the robot hand 2 is coupled to the robot arm 1 swingably.

A protrusion of a stopper 4b is disposed on the lower end of the end part of the hand bracket 4a and a protrusion of a stopper 4c on the upper end.

When the robot hand 2 is horizontal, the stopper 4b abuts a flange 1b of the robot arm 1.

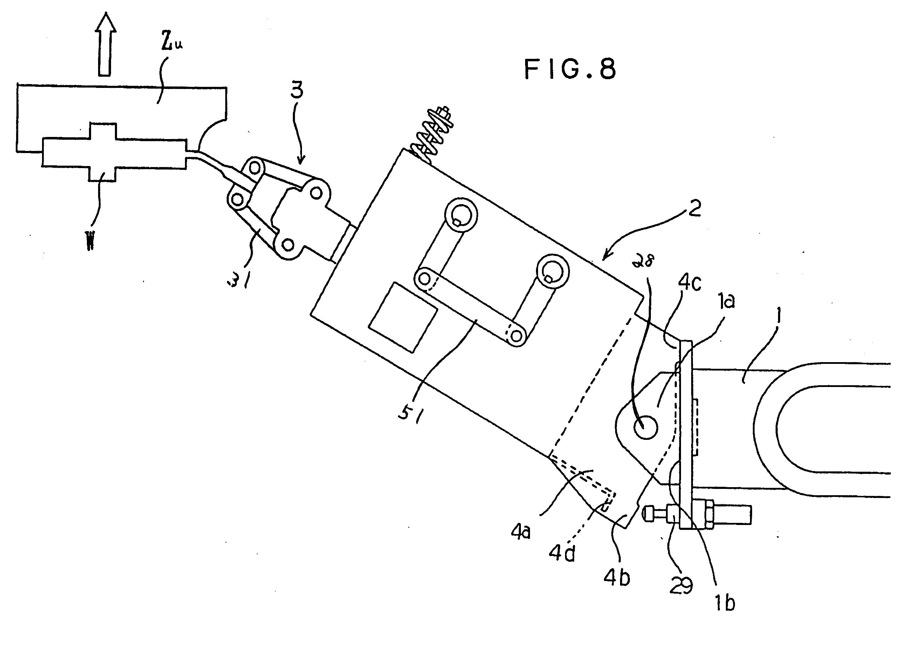

As shown in Figure 8, when an upward external force is applied to the forge workpiece W, the grip hand 3 is lifted up, and further, the entire robot hand 2 lifts up and leans diagonally upward. Where the stopper 4c collides with the flange 1b of the robot arm 1, the robot hand 2 stops and does not lift up any further. That is, the stoppers 4b and 4c regulate the swing range of the robot hand 2.

An upward external force may be applied to the forge workpiece W when the forge workpiece W adheres to an upper die Zu and rises together with the upper die Zu, as shown in Figure 8. In hammer forging, the upper die Zu momentarily repels and rises immediately after a strike with a hammer. At the time, if the workpiece W adheres to the upper die Zu, the grip hand 3 holding the workpiece W also attempts to momentarily rise a lot. Often, such an impulsive force cannot be completely absorbed by only a relative movement of the grip hand 3 to the grip casing 4. In such a case, the robot hand 2 swings upward with respect to the robot arm 1 to absorb the impulsive force.

When the external force applied to the forge workpiece W is removed, the robot hand 2 which leans diagonally upward falls to the former horizontal position. At this time, the protrusion of the stopper 4b collides with the flange 1b on the front end of the robot arm 1. However, slightly before this collision, a shock absorber 29 disposed in the lower part of the flange 1b on the front end of the robot arm 1 abuts an abutment piece 4d projected on the rear end of the casing 4. (See Figure 1.)

Therefore, it can reduce the shock when the robot hand 2 is restored to the former horizontal condition.

The shock absorber 29 and stopper piece 4d may be placed inversely, namely, the former may be disposed on the rear end of the casing 4 and the latter may be disposed on the flange 1b of the robot arm 1.

In the embodiment, a parallel link mechanism 51 on the casing side comprises the front and rear rotation shafts 5a and 5b, the front and rear vertical links 9a and 9b, the coupling link 11, and the pins 12a and 12b and a parallel link mechanism 52 on the grip side comprises the front and rear horizontal links 6 and 7, the front and rear suspension links 18a and 18b, the upper transverse shafts 15a and 15b, and the lower transverse shafts 19a and 19b, as shown in Figure 2. The above-mentioned coupling mechanism consists of these two link mechanisms 51 and 52. The casing-side parallel link mechanism 51 basically covers up and down motion of the grip hand 3. The grip-side parallel link mechanism 52 basically covers back and forth motion of the grip hand 3.

A die Z used in the embodiment is formed with three impressions of a first impression Z1, second impression Z2, and third impression (finishing impression), as shown in Figure 5.

The robot R is mounted on a robot movement mechanism 50 so that it can move along the die Z.

By the way, in forging work in which a forge workpiece W is inserted into the forging die Z and forged with the workpiece W held, and is moved to the next impression in the same die, before the forge workpiece W is inserted into the first impression Z1, fluid pressure is applied to the fluid pressure cylinder 13 for matching the axis center Ah of the casing 4 to the axis center Ag of the grip hand 3. Further, pressure is also applied to the fluid pressure cylinders 25 for fixing the grip hand 3, and then the forge workpiece W is held.

In this state, the workpiece W is moved to the position above the first impression Z1 and the pressure in the fluid pressure cylinders 13 and 25 is removed just before the forge workpiece W enters the first impression Z1. Therefore, the grip hand 3 can be displaced flexibly with respect to the casing 4. This means that when the workpiece W is inserted into the first impression Z1, the grip hand 3, namely, the workpiece W center, is off the center of the robot arm 1, but there is no harm done. (For example, the former center is off the latter center by Y, as shown in Figure 6.)

When the forge workpiece W is struck or pressurized for deformation in this state, the position of the grip hand 3 moves in parallel backward by X for displacement because of stretch deformation of the forge workpiece W (for example, as shown in Figure 7) while the up and down displacement Y changes from the condition before the strike.

Next, pressure is applied to the fluid pressure cylinders 25 for holding the position of the grip hand 3 as it is, and the robot arm 1 is operated to lift the robot hand 2 up to remove the forge workpiece W from the first impression Z1. When the forge workpiece W is inserted into the second impression Z2, it is moved in a lateral direction without a back and forth movement using a part of the length of the workpiece W (for example, a large diameter part of the center of the workpiece W) as the reference, and the axis center Az of the second impression Z2, the axis center Aa of the robot arm 1, and the axis center Ah of the casing 4 are matched to each other, whereby the forge workpiece W can be easily matched to the second impression Z2.

The workpiece W can be moved from the second impression Z2 and inserted into the third impression Z3 in a similar manner. Thus, if the axis center Az of the die impression, the axis center Aa of the robot arm 1, and the axis center Ah of the casing 4 are always matched to each other, the workpiece W can be accurately inserted into the target impression with the center of the robot arm 1 as the reference, no matter how much the grip hand 3 is displaced due to deformation of the holding part of the forge workpiece W.

In the embodiment, the axis center Aa of the robot arm 1 refers to a virtual line passing through the shaft 28 fitted to the tip of the robot arm 1 and parallel with the length of the robot arm 1, and the axis center Ah of the casing 4 also refers to a virtual line passing through the shaft 28 and parallel with the length of the casing 4, as shown in Figures 6 and 7. Therefore, if the hand-side stopper 4b comes in contact with the arm-side flange 1b and the robot hand 2 is in a horizontal condition (assuming that the robot arm 1 is also in a horizontal condition), the axis center Aa of the robot arm 1 and the axis center Ah of the casing 4 match. The axis center Ag of the grip hand 3 refers to the center line of the finger opening and closing fluid pressure cylinder 30. The axis center Az of the die impression refers to a line corresponding to the center line of the finished workpiece W in the impression. Since the cross section of the finished workpiece W is a circle in the embodiment, the center line of the finished workpiece W refers to a line passing through the center of the circle.

Upon completion of striking in the finishing impression Z3, pressure is applied to the fluid pressure cylinders 25 for holding the position of the grip hand 3 as it is, and the workpiece W is removed from the die impression Z3 and is moved to a predetermined workpiece release position E. Then, the forge workpiece W is released.

After this, the robot movement mechanism 50 shown in Figure 5 causes the robot R to return to a hold position S of another forge workpiece W. In the meantime, the pressure in the fluid pressure cylinders 25 is removed and at the same time, pressure is applied to the fluid pressure cylinders 13 and 22, returning the grip hand 3 to the initial position.

After this, pressure is applied to the fluid pressure cylinders 25 for fixing the grip hand 3 with respect to the casing 4, a new forge workpiece W is held, and forging work is started. The above-mentioned sequence is then repeated.

The fluid rotation cylinder 35 has a function of rotating the grip hand 3. When a held forge workpiece W is moved to the next impression, the function is used to rotate it 90° or turn the workpiece W upside down.

For example, the workpiece W bent vertically in the first impression Z1 can be rotated 90° and inserted into the second impression Z2 for forging a product bent horizontally.

Although the invention has been described in its preferred form with a certain degree of particularity, it is to be understood that the present disclosure of the preferred form can be changed with respect to the details of construction, and the combination and arrangement of parts may be altered without departing from the spirit and the scope of the invention as hereinafter claimed.

As described above, according to the forging robot hand 2 of the embodiment, the grip hand 3 holding a workpiece W can be moved up and down and back and forth, so that impulsive deformation caused in forging can be absorbed by the grip hand which is displaced, preventing damage to the robot hand 2 and the robot main unit.

Further, the relative positional relationship between the workpiece and the robot arm can be maintained accurately regardless of irregular and rapid deformation displacement of the holding part of the workpiece, thus the workpiece can be moved precisely between the impressions, and the time for shifting the workpiece from one hand to another is not required The cycle time can be shortened.

## Claims

1. A forging robot hand being fitted to a robot arm for holding a forge workpiece on which an impulsive load is imposed, said forging robot hand comprising:
a grip hand for holding the workpiece;
a grip casing into which a part of said grip hand is inserted, said grip casing being fitted to said robot arm;
means for coupling said grip hand to said grip casing so that said grip hand can make a relatively parallel movement with said grip casing;
position hold means for holding said grip hand making a relative movement with respect to said grip casing to the moved position; and
means for returning said grip hand to a predetermined initial position within a relative movement path of said grip hand with respect to said grip casing,
said grip hand having a plurality of fingers for holding the workpiece and a finger drive mechanism for opening and closing said plurality of fingers,
said grip casing into which said finger drive mechanism of said grip hand is inserted, said grip casing having one end open so as to allow said plurality of fingers to face the outside through said end, and the other end fitted to said robot arm,
said coupling means having two parallel link mechanisms each comprising a plurality of link pieces and a plurality of pins for coupling said plurality of link pieces to each other,
one of said two parallel link mechanisms, which will be hereinafter referred to as a casing-side parallel link mechanism, having two rotation shafts fitted to said grip casing for rotation with respect to said grip casing, two first link pieces parallel with each other, each having one end fitted to said corresponding rotation shaft, and a second link piece for coupling the opposed ends of said two first link pieces to each other via the pins, said first link pieces being fitted to said rotation shafts so as to rotate with rotation of said rotation shafts,
the other parallel link mechanism, which will be hereinafter referred to as a grip-side parallel link mechanism, having two first link pieces parallel with each other, each having one end fitted to said corresponding rotation shaft and two second link pieces parallel with each other, each having one end fitted to the other end of each of said first link pieces via the pins, said first link pieces being fitted to said rotation shafts so as to rotate with rotation of said rotation shafts, said two second link pieces each having the other end fitted to said grip drive mechanism via the pins.

2. The forging robot hand as claimed in claim 1 wherein said initial position return means has a position return fluid pressure cylinder which comes into contact with at least one of said plurality of link pieces forming part of said casing-side parallel link mechanism, which will be hereinafter referred to as a specific link piece, and can move said specific link piece to a position where said specific link piece should be placed when said grip hand is placed in the initial position.

3. The forging robot hand as claimed in claim 1 wherein said initial position return means has a position return fluid pressure cylinder which comes into contact with at least one of said plurality of link pieces forming part of said grip-side parallel link mechanism, which will be hereinafter referred to as a specific link piece, and can move said specific link piece to a position where said specific link piece should be placed when said grip hand is placed in the initial position.

4. The forging robot hand as claimed in claim 2 wherein said initial position return means has a position return fluid pressure cylinder which comes into contact with at least one of said plurality of link pieces forming part of said grip-side parallel link mechanism, which will be hereinafter referred to as a specific link piece, and can move said specific link piece to a position where said specific link piece should be placed when said grip hand is placed in the initial position.

5. The forging robot hand as claimed in claim 1 wherein said position hold means has a plurality of position hold fluid pressure cylinders being fitted to said grip casing for pinching said grip drive mechanism of said grip hand so as to disable said grip hand from making a relative movement with respect to said grip casing.

6. The forging robot hand as claimed in claim 4 wherein said position hold means has a plurality of position hold fluid pressure cylinders being fitted to said grip casing for pinching said grip drive mechanism of said grip hand so as to disable said grip hand from making a relative movement with respect to said grip casing.

7. The forging robot hand as claimed in claim 1, 2, 3, 4, 5, or 6 further including a hook for hooking at least one of said pins for coupling said plurality of link pieces forming part of said casing-side parallel link mechanism to each other and said pins for coupling said plurality of link pieces forming part of said grip-side parallel link mechanism to each other, which will be hereinafter referred to as a specific pin, and a spring for applying an elastic force in a direction opposite to a relative movement of said hook with respect to said grip casing as said specific pin moves,
said spring generating an elastic force balancing with a load imposed on said specific pin (except the elastic force of said spring) when said grip hand does not hold the workpiece and is in the initial position.

8. The forging robot hand as claimed in claim 1, 2, 3, 4, 5, 6, or 7 wherein said grip drive mechanism of said grip hand comprises:
a finger opening and closing fluid pressure cylinder having a piston reciprocating so as to open and close said plurality of fingers and a cylindrical cylinder casing for housing said piston to allow it to reciprocate;
a housing for housing said cylinder casing for rotation with the center axis of said cylindrical cylinder casing as the center; and
a rotation drive source being fitted to said housing for rotating said plurality of fingers fitted to said finger opening and closing fluid pressure cylinder together with said fluid pressure cylinder in said housing;
said two second link pieces of said grip-side parallel link mechanism each having the other end fitted to said housing via said pins.

9. The forging robot hand as claimed in claim 1, 2, 3, 4, 5, 6, 7, or 8 wherein an elastic member lies between the other end of each of said second link pieces of said grip-side parallel link mechanism and said pin.

10. A forging robot comprising a robot hand as claimed in claim 1, 2, 3, 4, 5, 6, 7, 8, or 9, a robot arm, and a coupling pin for swingably coupling said robot hand to said robot arm, wherein one of said robot hand and said robot arm is provided with a flange and the other is provided with a stopper abutting said flange for regulating a swing range of said robot hand with respect to said robot arm.

11. The forging robot as claimed in claim 10 wherein one of said robot hand and said robot arm is provided with a shock absorber for absorbing a shock when said stopper collides with said flange and the other is provided with an abutment piece that said shock absorber abuts.
